# EUROPEAN PATENT APPLICATION

(11) **EP 4 708 205 A1**
(43) Date of publication of application: **11.03.2026**
(21) Application number: 25200404.9
(22) Date of filing: 05.09.2025
(51) Int. Cl.: G06T 15/06

(54) **SYSTEM AND METHOD FOR SPECTRAL RENDERING OF GRAPHICS DATA**

(30) Priority: 05.09.2024 GB 202413033
(71) Applicant: Sony Interactive Entertainment Inc., Tokyo 108-0075 (JP)
(72) Inventor: COCKRAM, Philip, London, W1F 7LP (GB); ARMSTRONG, Calum, London, W1F 7LP (GB); SMITH, Alexei Ashton Derek, London, W1F 7LP (GB); DIXON, Alex, London, W1F 7LP (GB); LEONARDI, Rosario, London, W1F 7LP (GB); SANDERS, Matthew William, London, W1F 7LP (GB)
(74) Representative: Fish & Richardson P.C.

(57) **Abstract**

A computer-implemented method for rendering graphics data representative of a 3D scene comprising one or more objects and one or more light sources on a video gaming system. The method comprises obtaining a set of rendering parameter values for ray tracing the scene; varying the set of rendering parameter values across a plurality of pixels of a frame of the scene; and performing spectral rendering to generate a frame of the scene using the varied rendering parameter values.

## Description

### FIELD OF THE INVENTION

The present invention is in the field of video gaming systems and relates to systems and methods for rendering graphics data.

### BACKGROUND

Ray-traced spectral rendering is a technique used in computer graphics to simulate the interaction of a spectrum of light wavelengths (e.g., a spectrum of visible light wavelengths) with surfaces and materials in a scene. Ray-traced spectral rendering uses algorithms that simulate real-world physical phenomena to accurately simulate how light is absorbed, transmitted, and/or scattered by different materials at different wavelengths.

By simulating the interaction of a spectrum of wavelengths, ray-traced spectral rendering can provide an improvement over traditional rendering techniques, which often simplify the behavior of light, treating it as a single entity or as having only a few discrete colors (e.g., red, blue, and green). This is because light in the real world comprises a continuous spectrum of wavelengths, and different materials interact with light in complex ways depending on the wavelength of light.

Ray-traced spectral rendering can allow for more realistic rendering of effects such as dispersion (the separation of light into its component colors), subsurface scattering (the diffusion of light through translucent materials), and spectral reflection and refraction (the bending of light as it passes through different mediums). Thus, ray-traced spectral rendering can produce more realistic images when compared to traditional rendering techniques.

However, ray-traced spectral rendering is computationally intensive and requires significant processing power. This is due, in part, to ray-traced spectral rendering involving tracing each ray at multiple wavelengths, which significantly increases the computational workload compared to traditional rendering techniques that consider only a single wavelength.

Some algorithms comprise wavelength multiplexing techniques such that each ray comprises multiple wavelengths of light. These multiple wavelengths of light are typically randomly selected from a set of wavelengths. However, wavelength multiplexing techniques still requires the simulation of a significant number of rays to gather the requisite information and is therefore still computationally expensive.

There is accordingly a need for a method that overcomes these issues and facilitates ray-traced spectral rendering at a reduced computational intensity.

### SUMMARY OF INVENTION

In a first aspect of the invention, there is provided a computer-implemented method for rendering graphics data representative of a 3D scene comprising one or more objects and one or more light sources on a video gaming system, the method comprising: obtaining a set of rendering parameter values for ray tracing the scene; varying the set of rendering parameter values across a plurality of pixels of a frame of the scene; and performing spectral rendering to generate a frame of the scene using the varied rendering parameter values.

The "scene" may be represented by a data structure comprising information required for rendering a frame, such as data describing the one or more objects (e.g., positions, vertices, material properties, and other data known in the art), and data describing the one or more light sources (e.g., position, colour, intensity, direction, and other data known in the art). The "frame" may refer to an image rendered based on the information stored in the scene data structure. The "plurality of pixels" may refer to an array (e.g., a two-dimensional array) of pixels that form the frame.

The set of rendering parameter values may be understood as a set of values of a particular rendering parameter. For example, a rendering parameter may be a wavelength (e.g., a wavelength used for ray tracing) and the set of rendering parameter values may be a set of wavelengths (i.e., a set of wavelength values) for ray tracing the scene.

Varying the set of rendering parameter values across the plurality of pixels of the frame may be understood as a rendering parameter value for ray tracing associated with a first pixel being different to a rendering parameter value for ray tracing associated with a second pixel. For example, when the rendering parameter is a wavelength of a ray to be traced, a wavelength sampled for a first pixel may be different to a wavelength sampled for a second pixel. Thus, there may be a variation in rendering parameter values across the plurality of pixels.

As discussed above, ray-traced spectral rendering techniques often involve tracing each ray at multiple wavelengths, leading to a significant computational workload required to render a frame. The present invention may advantageously reduce the number of rendering parameter values sampled for each pixel, thereby reducing the computational workload required to render the frame. In particular, varying the set of rendering parameter values across the plurality of pixels may result in fewer rendering parameter values sampled in the ray tracing process for each pixel. For example, when the rendering parameter is a wavelength, each ray for a certain pixel may be sampled using fewer wavelengths than existing ray-traced spectral rendering techniques. In the context of the present invention, the term "sampling" may refer to performing a ray tracing iteration.

In some embodiments, varying the set of rendering parameter values across the plurality of pixels comprises: selecting a first set of pixels from the plurality of pixels; and assigning, to each pixel in the first set of pixels, a respective subset of rendering parameter values; wherein each pixel in the first subset of pixels is assigned a different subset of rendering parameter values. The "subset of rendering parameter values" may be understood as a proper subset such that there are fewer elements than the set of rendering parameter values. In this way, the subset of rendering parameter values assigned to each pixel is smaller than the set of rendering parameter values obtained. Advantageously, fewer rendering parameter values may be sampled for each pixel, because less than all of the set of rendering parameter values are used for ray tracing, thereby reducing the computational workload required to render the frame. Preferably, every rendering parameter value in the subset of rendering parameter values is present in at least one subset of rendering parameter values, such that all rendering parameter values are used in the ray tracing process of the first set of pixels.

There may be no common rendering parameter values between each subset of rendering parameter values. That is, there may be no rendering parameter value that is used for more than one pixel. For example, when the rendering parameter is a wavelength, a first subset of wavelengths may be assigned to a first pixel, and a second subset of wavelengths may be assigned to a second pixel, the first subset of wavelengths being different to the second subset of wavelengths. This may apply to all pixels in the selected first set of pixels. In this way, the number of ray tracing iterations can be greatly reduced.

Selecting the first set of pixels from the plurality of pixels may comprise: selecting an array of pixels from the plurality of pixels. For example, the array of pixels may be a two-dimensional array of pixels. Each pixel in the array may be proximate at least one other pixel in the array. The array of pixels is preferably a subset of the plurality of pixels of the frame. There may be a plurality of arrays of pixels in the frame, and each pixel in an array of pixels may be assigned a different subset of rendering parameter values. Advantageously, the proximity of the pixels in the first set of pixels may mitigate any loss in frame image quality because all rendering parameter values are sampled at least once in the first set of pixels.

The number of pixels in the first set of pixels may be equal to the number of rendering parameter values in the set of rendering parameter values. In this way, every rendering parameter value in the set of rendering parameter values is applied to the first set of pixels, with a distinct rendering parameter value being assigned to each pixel. For example, if the rendering parameter is a wavelength, the number of pixels in the first set of pixels may be equal to the number of wavelengths in the set of wavelengths, and each pixel may be assigned a different wavelength for ray tracing. In this way, the same number of wavelengths may be sampled as in the conventional approach, but only one wavelength may be used per pixel, thereby significantly reducing the number of rays required for the ray tracing process.

The method may further comprise: assigning, to each pixel in the first set of pixels, a respective second subset of rendering parameter values; and performing spectral rendering to generate a second frame of the scene using the second subset of rendering parameter values; wherein each pixel in the first subset of pixels is assigned a different second subset of rendering parameter values. In this way, the rendering parameter values used for rendering a particular pixel may be changed from a first frame to a second frame. For example, when the rendering parameter is a wavelength, the wavelength at which a particular pixel is rendered changes between the first frame and the second frame. At a typical framerate, the user may not perceive changes in the pixel's colour from one frame to the next, but the ray tracing steps that need to be performed per frame may be greatly reduced, thereby reducing the computational workload required to render a sequence of frames.

In some embodiments, varying the set of rendering parameter values across the plurality of pixels of the frame of the scene comprises: selecting a first set of pixels from the plurality of pixels; selecting a second set of pixels from the plurality of pixels; assigning, to each pixel in the first set of pixels, a first set of rendering parameter values; and assigning, to each pixel in the second set of pixels, a second set of rendering parameter values. In this way, varying the set of rendering parameter values across the plurality of pixels of the frame may be achieved by using different rendering parameter values for the first set of pixels than the rendering parameter values used for the second set of pixels.

In some embodiments, selecting the first set of pixels from the plurality of pixels comprises: identifying a user's point of regard in the 3D scene; determining a point of regard pixel, wherein the point of regard pixel is a pixel of the frame that corresponds to the point of regard in the 3D scene; and selecting one or more pixels within a boundary of the point of regard pixel as the first set of pixels. The first set of pixels may therefore be a set of pixels associated with a user's central region of vision (i.e., a foveal region). The user may be more sensitive to colours of this first set of pixels. Identifying the first set of pixels in this manner may advantageously provide a means for the system to assign a greater number of rendering parameter values to the pixels that make a larger impact on the user's perceptible quality.

The boundary may be a shape centred on the point of regard pixel. The shape may be a circle and the boundary may be defined by a threshold number of pixels. In this way, the system may advantageously select the first set of pixels in a computationally inexpensive manner.

In some embodiments, selecting the second set of pixels comprises: selecting one or more peripheral pixels as the second set of pixels; wherein the peripheral pixels are pixels of the frame located outside of the boundary. This second set of pixels may therefore be associated with a peripheral region of the user's vision, which may be less sensitive to colour. Identifying the second set of pixels in this manner may advantageously provide a means for the system to identify the second set of pixels in a computationally inexpensive manner.

The first set of rendering parameter values may comprise a greater number of rendering parameter values than the second set of rendering parameter values. In this way, fewer rendering parameter values may be used to render the second set of pixels. The second set of pixels may be associated with a peripheral region of the user's vision and the computational load required to render the second set of pixels may advantageously be reduced with a minimal perceptible loss of detail.

Selecting the first set of pixels from the plurality of pixels may comprise: selecting a plurality of adjacent pixels having corresponding spectral properties. That is, each pixel may be associated with an object or surface in the scene having corresponding spectral properties. In the context of the invention, "corresponding spectral properties" may refer to spectral properties having a threshold similarity. Thus, the first set of pixels may be pixels that may be sampled using similar or the same rendering parameter values.

Selecting the plurality of adjacent pixels having corresponding spectral properties may comprise: selecting a plurality of pixels associated with a first object of the 3D scene. This may be achieved by comparing pixel location data with geometry data describing a boundary of the first object. In this way, the system may identify adjacent pixels having corresponding spectral properties in a computationally inexpensive manner.

The set of rendering parameter values may comprise a set of wavelengths, and assigning, to each pixel in the first set of pixels, the first set of rendering parameter values may comprise: identifying one or more wavelengths that provide a threshold contribution to each pixel; and selecting the plurality of wavelengths that provide a threshold contribution to each pixel as the subset of rendering parameter values. The "one or more wavelengths that provide a threshold contribution to each pixel" may refer to wavelengths that substantially influence the "look" of the pixel. Advantageously, computational resources may be saved because the pixels may not be sampled using wavelengths that do not meet this threshold contribution to the pixel.

Identifying the one or more wavelengths that provide the threshold contribution to each pixel may comprise: identifying one or more wavelengths that are associated with the first object and at least one light source of the one or more light sources. The "one or more wavelengths that are associated with the first object" may refer to wavelengths that are reflected by the first object. The "one or more wavelengths that are associated with at least one light source" may refer to wavelengths that are emitted by at least one light source. This wavelength information may be stored in texture data and lighting data describing the 3D scene. Advantageously, the system may identify these one or more wavelengths in a computationally inexpensive manner.

The present invention may provide an alternative to Montecarlo sampling. Montecarlo sampling is a process in which uniformly random samples from a domain are taken to compute the average. Montecarlo sampling is known to introduce noise to the rendering process and has a slow convergence. The present invention provides an importance sampling process in which the sampling is distributed in an area that is more important (i.e., contributes more to the convolution of each pixel). The samples may be weighted accordingly to account for the distribution not being uniform, for example by employing known importance sampling techniques. Advantageously, the present invention may reduce noise and require fewer samples to generate the same image quality. The present invention may therefore be faster and/or less computationally expensive than known spectral rendering algorithms.

In some embodiments, the object spectrum comprises wavelengths that meet a threshold reflection intensity and the light source spectrums comprise wavelengths that meet a threshold emission intensity. In this way, the number of wavelengths sampled may be further reduced because only wavelengths that meet the threshold reflection intensity in the object spectrum are compared with wavelengths that meet the threshold emission intensity of the light source spectrums. Advantageously, computational load may be further reduced.

In another aspect of the invention, there is provided a non-transitory storage medium comprising instructions that when executed by a processor cause the processor to perform the method of the first aspect. The processor may comprise a central processing unit (CPU) and a graphics processing unit (GPU).

In another aspect of the invention, there is provided a computer program comprising instructions that when executed by a processor cause the processor to perform the method of the first aspect. The processor may comprise a central processing unit (CPU) and a graphics processing unit (GPU).

In another aspect of the invention, there is provided a video gaming system for rendering graphics data of a 3D scene, the system comprising a processor and a GPU and being configured to perform the method of the first aspect.

In another aspect of the invention, there is provided a computer-implemented method for rendering graphics data representative of a 3D scene comprising one or more objects and one or more light sources on a video gaming system, the method comprising: obtaining a set of rendering parameter values for ray tracing the scene; identifying one or more rendering parameter values that provide a threshold contribution to the scene; performing spectral rendering to generate a frame of the scene using the rendering parameter values that provide a threshold contribution to the scene.

### BRIEF DESCRIPTION OF DRAWINGS

Figure 1 illustrates a video gaming system according to the present invention;
Figure 2 illustrates a method flow diagram of a method for rendering graphics data using the system of Figure 1;
Figure 3 illustrates a method flow diagram of a first implementation of a step of varying a set of rendering parameter values across a plurality of pixels of a frame of a scene;
Figure 4 illustrates an example scene comprising a 10 by 10 array of pixels;
Figure 5A illustrates a method flow diagram of a second implementation of the step of varying the set of rendering parameter values across the plurality of pixels of the frame of the scene;
Figure 5B illustrates a method flow diagram of an implementation of a step of selecting a first set of pixels from a plurality of pixels; and
Figure 6 illustrates an alternative implementation of a method for rendering graphics data using the system of Figure 1.

### DETAILED DESCRIPTION

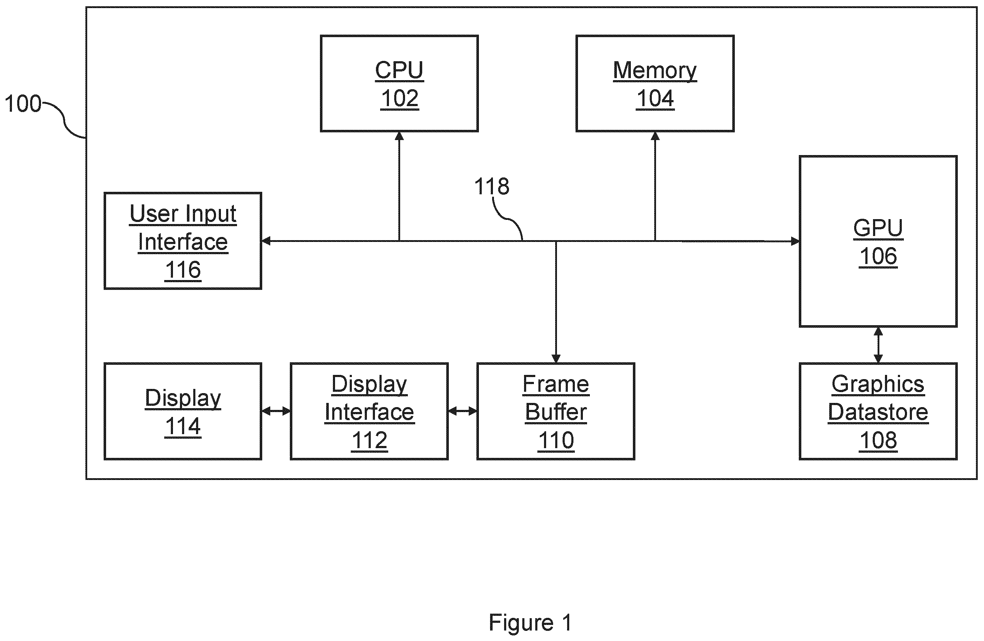

Figure 1 illustrates a video gaming system 100 configured to implement methods disclosed herein.

The system 100 comprises a central processing unit (CPU) 102; a memory 104; a graphics processing unit (GPU) 106; a graphics datastore 108; a frame buffer 110; a display interface 112; and a display 114. The system 100 further comprises a system bus 118 arranged to communicatively couple the CPU 102; the memory 104; the GPU 106; and the frame buffer 110. The system 100 may further comprise other components typical to a video gaming system, such as a user input interface 116.

The CPU 102 is arranged to control operation of the system 100. For example, the CPU 102 is arranged to load instructions stored on the memory 104 in order to cause the CPU 102 to perform the methods disclosed herein. The memory 104 may include one or more volatile or non-volatile storage devices, such as random-access memory (RAM), dynamic RAM (DRAM), and/or any other suitable storage medium comprising instructions that when executed by the CPU 102, cause the CPU 102 to perform the method steps disclosed herein. The memory 104 comprises one or more graphics rendering instructions that instruct the CPU 102 to cause the rendering of graphics data to the display 114.

The GPU 106 is arranged to be controlled by the CPU 102. For example, the CPU 102 comprises a GPU driver (not shown) for controlling operation of the GPU 106 to facilitate execution of the methods disclosed herein. To process the graphics rendering instructions, the CPU 102 controls the GPU to perform the rendering of graphics data. These graphics rendering instructions conform to a graphics application programming interface (API) such that the GPU can efficiently implement graphics rendering steps. The GPU 106 comprises a GPU memory (not shown) arranged to store visual data such as textures, geometry, and other graphical assets. The GPU memory includes, for example, video random access memory (VRAM).

The CPU 102 and the GPU 106 are coupled to the graphics datastore 108 (for example via a bus (not shown)) such that the CPU 102 and the GPU 106 can read and write data to the graphics datastore 108. The graphics datastore 108 may include one or more volatile or non-volatile storage devices, such as random-access memory (RAM), dynamic RAM (DRAM), and/or any other suitable storage medium.

The graphics datastore 108 is arranged to store a graphics data representative of a virtual 3D scene comprising one or more objects and one or more light sources. The graphics data comprises geometry data, viewpoint data, texture data, lighting data, shading data; and other data describing the virtual scene. The geometry data includes a list of vertices defining the shapes of the one or more objects; a list of faces or polygons that use the vertices to form the surface of the one or more objects; and other optional data. The viewpoint data defines the position and orientation of the viewer or camera within the scene. The texture data comprises spectral texture data that describes the spectral behaviour (e.g., the reflectance and/or absorption of particular wavelengths) of particular textures; and mapping coordinates that map the spectral texture data to geometric surfaces of the one or more objects. The lighting data defines the properties (e.g., position) and behaviour (e.g., spectral properties) of the one or more light sources within the scene. The shading data comprises information about shading for different materials and provides instructions on how to combine spectral data during rendering.

The graphics datastore 108 is also arranged to store a set of rendering parameter values for ray tracing the virtual scene. The set of rendering parameter values typically comprises a set of wavelengths for ray tracing the virtual scene. The set of wavelength values is a set of wavelength values, and there may be a predefined wavelength difference between each wavelength value in the set. For example, the set of wavelength values may be a discrete set of wavelength values ranging from 380 nm to 700 nm, with a 1 nm wavelength difference between adjacent wavelength values in the set.

The frame buffer 110 is arranged to receive rendered image data from the CPU 102 and/or the GPU 106 (for example in the form of processed pixels), the rendered image data being representative of an image (or a frame) to be displayed on the display 114. The display interface 112 is arranged to retrieve the rendered image data from the frame buffer and cause the display 114 to display the image represented by the rendered image data. The display 114 may be any device suitable for displaying the image represented by the rendered image data. The display 114 may be, for example, a liquid crystal display (LCD), a plasma display panel, or any other suitable display device.

In some implementations, the system 100 comprises, or is in communication with, a head mounted display (HMD) (not shown), which comprises the display 114. The HMD is arranged to display a virtual reality (VR) environment representing the virtual scene. The HMD comprises one or more light sources (e.g., infrared light sources) arranged to illuminate a user's eyes, and one or more optical sensors arranged to capture rays reflected from the user's eyes. The HMD can also comprise a processing unit. The system 100 is adapted to determine a user's point of regard or gaze point. This can be achieved by the CPU 102 or the processing unit of the HMD.

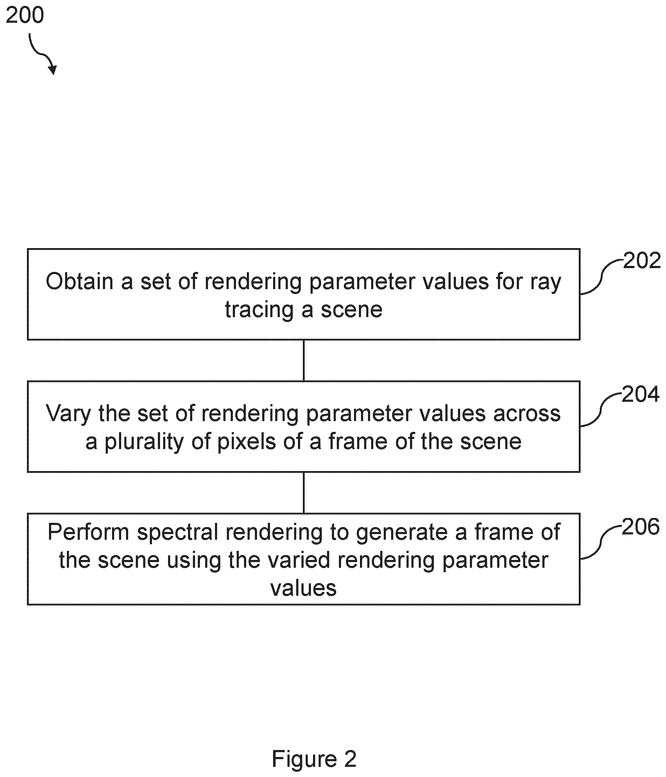

Figure 2 illustrates a method flow diagram of a method according to the present invention. More particularly, Figure 2 illustrates a computer implemented method 200 for rendering graphics data of a 3D scene comprising one or more objects and one or more light sources on the video gaming system 100. One or more steps of the method 200 are implemented by the CPU 102 and the GPU 106.

Step 202 of the method 200 comprises obtaining a set of rendering parameter values for ray tracing the scene.

As discussed above, the set of rendering parameter values comprises a set of wavelength values for ray tracing the virtual scene. The CPU 102 obtains 202 the set of wavelength values by accessing the graphics datastore 108.

Step 204 comprises varying the set of rendering parameter values across a plurality of pixels of a frame of the scene.

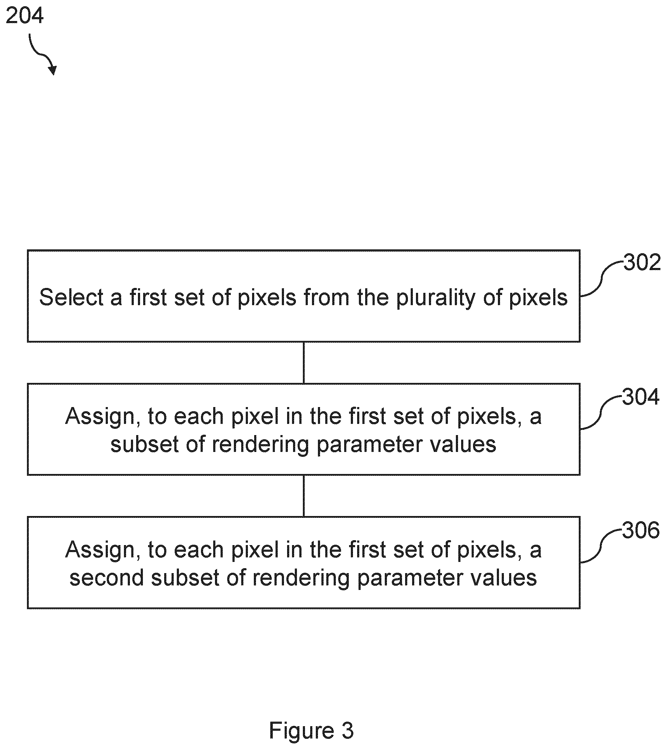

Figure 3 illustrates a first implementation of the step of varying 204 the set of rendering parameter values across the plurality of pixels of the frame of the scene.

In the following example, the set of rendering parameter values comprises a set of wavelength values. The set of wavelength values comprises 9 distinct wavelength values.

The CPU 102 selects 302 a first set of pixels from the plurality of pixels. For example, the CPU 102 selects 302 an array of pixels (i.e., a two-dimensional array of pixels) from the plurality of pixels. The CPU 102 may select 302 this first set of pixels by identifying pixels associated with an object. Alternatively, the CPU 102 selects 302 any array of pixels.

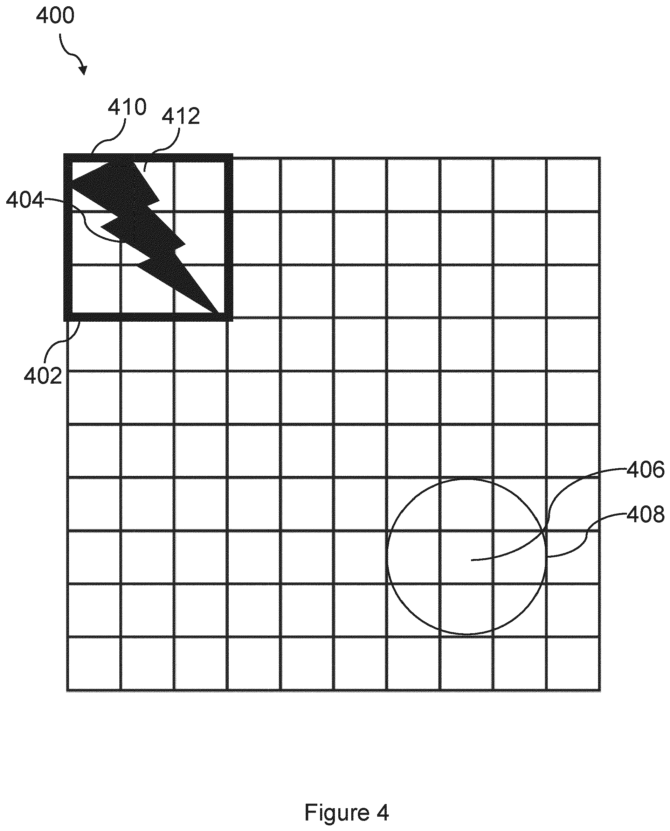

Figure 4 illustrates an example frame 400 comprising the plurality of pixels. The frame 400 comprises a 10 by 10 array of pixels 400. It will be understood that this example frame 400 is for illustration only, and the plurality of pixels is not limited to a 10 by 10 array of pixels. In this example, the CPU 102 selects 302 a 3 by 3 array of pixels 402 by identifying pixels associated with an object 404. For example, the CPU 102 can determine which pixel locations fall within an object's boundary, which may be stored in the geometry data on the graphics datastore 108. The array of pixels 402 may be considered pixels of interest, because they are associated with a particular object. It will be appreciated that, whilst Figure 4 illustrates only one array of pixels 402, there may be a plurality of arrays of pixels 402 spanning the frame 400. Each of the plurality of arrays of pixels 402 may share no common pixel. This varying step may be applied to each array separately.

The CPU 102 assigns 304, to each pixel in the first set of pixels, a respective subset of rendering parameter values (e.g., wavelength values). Each of the rendering parameter values are present in at least one of the subsets of rendering parameter values. Therefore, all rendering parameter values are used in the first set of pixels and the same number of wavelengths are sampled as in the conventional approach. For example, if in a conventional spectral rendering algorithm each pixel is sampled at 10 wavelengths per pixel per frame, in the present invention each pixel in the first set of pixels is sampled at fewer than 10 wavelengths, but all 10 wavelengths are sampled across the first set of pixels.

The subset of rendering parameter values is a proper subset of the set of rendering parameter values, such that there are fewer elements in the subset of rendering parameter values than the set of rendering parameter values. Continuing with the present example, each pixel in the first set of pixels 402 is assigned 8 or fewer distinct wavelength values (i.e., fewer than the 9 distinct wavelength values in the set of wavelength values). Therefore, a reduced set of rendering parameter values are sampled in a subsequent rendering step, thus reducing the computational load required to render each pixel.

Each pixel in the first subset of pixels is assigned 304 a different subset of wavelength values. Therefore, varying 204 the set of rendering parameter values is achieved because each pixel in the first set of pixels is assigned 404 a different subset of rendering parameter values, so the rendering parameter values are different for each pixel in the first set of pixels.

In some implementations, there are no common rendering parameter values between each subset of rendering parameter values. Thus, each pixel is assigned a completely different subset of wavelengths. Continuing with the present example, since there are 9 wavelength values, and there are 9 pixels in the array of pixels 402, each pixel in the first set of pixels 402 is assigned only one wavelength value.

Thus, if in a conventional spectral rendering algorithm each pixel is sampled at 9 wavelengths per frame, in this implementation 9 wavelengths would be sampled across the first set of pixels, but each pixel would be rendered using fewer than 9 wavelengths.

The CPU 102 also assigns 306, to each pixel in the first set of pixels, a respective second subset of rendering parameter values. This second subset of rendering parameter values is used in a subsequent rendering step, as discussed further below. Each pixel in the first set of pixels is assigned 306 a different (e.g., a respective) second subset of rendering parameter values. For a particular pixel of the first set of pixels, the second subset of rendering parameter values is different to the first subset of rendering parameter values. For example, for the first frame a pixel 410 is assigned 306 a first subset of wavelengths, for example wavelength 1. For the second frame, the pixel 410 is assigned 306 a second subset of wavelengths, for example wavelength 2.

In conventional approaches to spectral rendering, each pixel is sampled using a selection of wavelength values for each frame. The same set of wavelength values are sampled for each pixel for each frame. In this implementation of the invention, each pixel is sampled at a reduced number of wavelength values, and the wavelength values at which a pixel is sampled in a first frame is different to the wavelength values at which the pixel is sampled in a second (subsequent) frame. At typical framerates, the user will not perceive changes in the pixel's colour from one frame to the next, but the number of ray tracing iterations per frame is greatly reduced, thereby reducing the computational resources required to render the frame.

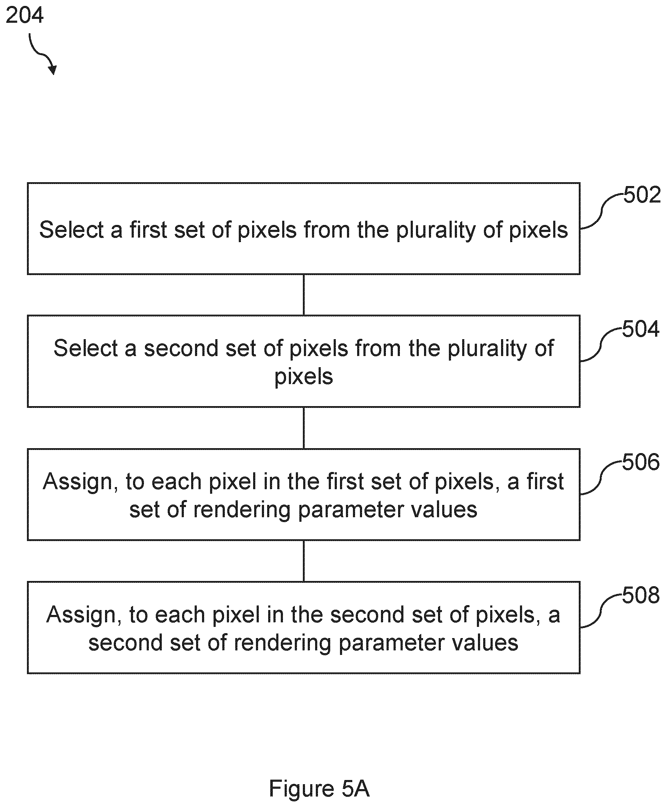

Figure 5A illustrates a second implementation of the step of varying 204 the set of rendering parameter values across the plurality of pixels of the frame of the scene.

In the following example, the set of rendering parameter values comprises a set of wavelength values. The set of wavelength values comprises 9 distinct wavelength values. In this second implementation, step 204 occurs at runtime.

The CPU 102 selects 502 a first set of pixels from the plurality of pixels.

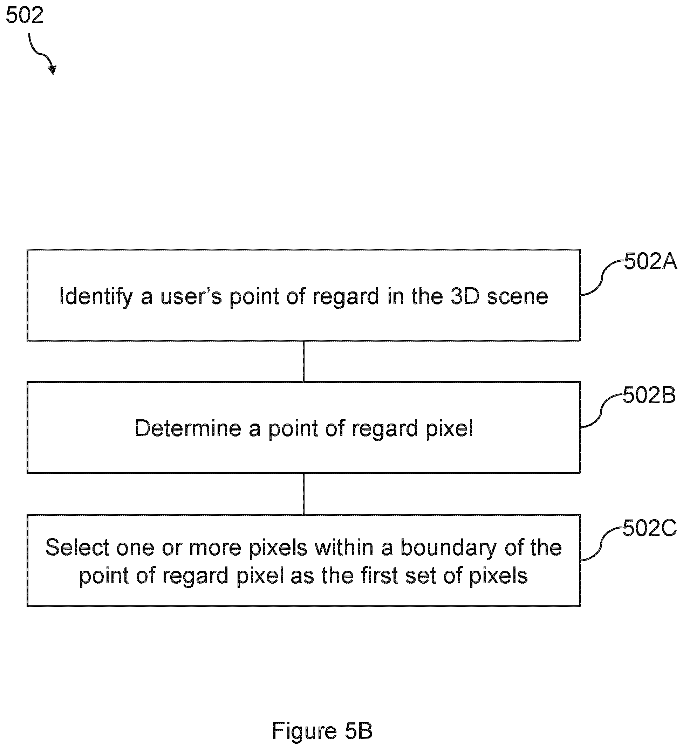

Figure 5B illustrates an implementation of the step of selecting 502 a first set of pixels from the plurality of pixels.

In this example, the HMD is used, although it will be appreciated that this may also be achieved using a conventional display having a means for tracking the user's gaze.

The CPU 102 identifies 502A a user's point of regard or gaze point in the 3D scene. The user's "point of regard" refers to a specific location in the 3D virtual environment or scene where the user's gaze is focused at any given point. The one or more infrared light sources illuminates the user's eyes with infrared rays and the one or more sensors capture reflected infrared rays. The CPU 102 detects a position of the pupil and a position of a corneal reflection (e.g., based on the sensor data), and uses this data to determine a gaze vector representative of the line of sight from the user's eyes. The CPU 102 uses the gaze vector to determine an intersection point with a virtual object or surface in the virtual environment. This intersection point is the user's point of regard in the 3D scene.

The CPU 102 determines 502B a point of regard pixel. The point of regard pixel is a pixel of the frame that corresponds to the point of regard in the 3D scene. For example, the CPU 102 maps the gaze vector to a specific pixel of the HMD display. Referring back to Figure 4, the point of regard pixel is determined as pixel 406 of the frame 400.

The CPU 102 selects 502C one or more pixels within a boundary of the point of regard pixel as the first set of pixels. The boundary could be defined by a shape centred on the point of regard pixel. For example, the shape could be a circle and the boundary could be defined by a threshold number of pixels. Referring back to Figure 4, the shape is a circle 408 centred on the point of regard pixel 406, and the boundary is defined by a threshold number of pixels. In this example, the threshold number of pixels is 1.5 pixels, but this could be any number of pixels. Alternatively, the shape could be a square or any other shape. Any pixels that are at least partially within the boundary are selected as the first set of pixels.

Referring back to the second implementation shown in Figure 5A, the CPU 102 selects 504 a second set of pixels from the plurality of pixels.

For example, the CPU 102 selects one or more peripheral pixels as the second set of pixels. The peripheral pixels are pixels of the frame located outside of the boundary. Referring back to Figure 4, the peripheral pixels are all pixels that are not at least partially within the boundary 408.

The human eye is generally most sensitive to colour in the central region of vision, called the fovea, and colour sensitivity declines in the peripheral regions. The first set of pixels are pixels associated with this central region of vision, whilst the second set of pixels are pixels associated with the peripheral regions.

The CPU 102 assigns 506, to each pixel in the first set of pixels, a first set of wavelength values.

The CPU 102 assigns 508, to each pixel in the second set of pixels, a second set of wavelength values.

The first set of wavelength values comprises a greater number of wavelength values than the second set of wavelength values. For example, the first set of wavelengths values comprises all 9 wavelength values in the set of wavelength values. In some implementations, fewer than all 9 wavelength values are used in the first set of wavelengths. In some implementations, the second set of wavelength values comprises no wavelength values, such that spectral rendering does not occur at the second set of pixels.

As mentioned above, the first set of pixels are pixels associated with the fovea, whilst the second set of pixels are pixels associated with peripheral regions. Therefore, more wavelengths are assigned to the region of vision that is most sensitive to colour than the region of vision that is less sensitive. Sampling fewer wavelengths for the peripheral region could reduce the computation load required to render the scene without causing a perceptible loss of detail.

In this second implementation, varying the set of rendering parameter values (i.e., the set of wavelength values) is achieved because a different set of rendering parameter values are assigned to the first set of pixels compared to those assigned to the second set of pixels.

In an alternative implementation of the step of selecting 502 a first set of pixels from the plurality of pixels, the CPU 102 selects the first set of pixels by selecting a plurality of adjacent pixels having corresponding spectral properties. That is, the CPU 102 selects the plurality of adjacent pixels that have spectral properties within a threshold similarity of each other. This threshold similarity may be determined using any known means, such as a clustering algorithm.

For example, referring back to Figure 4, the CPU 102 determines that a first pixel 410 and a second pixel 412 (i.e., pixels of the plurality of pixels 402) are both associated with the object 404 (e.g., because their pixel locations fall within the object boundary) and the pixels 410, 412 therefore both have corresponding spectral properties. It will be appreciated that the plurality of adjacent pixels may not be associated with a specific object and may be associated with any feature of the scene, such as the sky, as long as these adjacent pixels have corresponding spectral properties.

Continuing with this alternative implementation, the set of rendering parameter values comprises a set of wavelengths. Assigning 506, to each pixel in the first set of pixels, the first set of rendering parameter values comprises: identifying one or more wavelengths that provide a threshold contribution to each pixel; and selecting the one or more of wavelengths that provide a threshold contribution to each pixel in the first set of pixels as the first set of rendering parameter values.

Identifying the one or more wavelengths that provide the threshold contribution to each pixel comprises: identifying one or more wavelengths that reach at least one light source of the one or more light sources.

For example, using the first pixel 410 as an example, the GPU 106 performs an initial sampling by simulating the path of rays of different wavelengths through the first pixel 410. These rays propagate through the scene and interact with the object 404, based on the spectral properties of the object 404. Different wavelengths will be reflected or absorbed based on these spectral properties. The GPU 106 determines which rays (e.g., which secondary rays) reach at least one light source, and identifies the wavelengths associated with these rays as wavelengths that provide the threshold contribution. These rays will be rays that are not absorbed by the object 404 (e.g., because they are reflected). By performing this process, the GPU 106 identifies which wavelengths will actually contribute to the "look" of the scene for the first set of pixels 402 associated with the object 404.

Since the first set of pixels have corresponding spectral properties (i.e., because they are associated with the first object), the GPU may perform the initial sampling on only one pixel of the first set of pixels (e.g., only the first pixel 410). In this way, the initial sampling step is computationally inexpensive compared to an initial sampling of a plurality of pixels.

Through this initial sampling, the GPU 106 may determine that certain wavelengths or wavelength ranges are not required for the first set of pixels because they do not contribute to the "look" of the frame or scene, for example because they are absorbed or scattered by an object such that they do not contribute. Based on this information, the wavelengths for the first set of pixels may be selected, removing other unneeded wavelengths. Therefore, a reduced number of rays and wavelengths are sampled in the subsequent render of the pixels of the scene. Thus, fewer wavelengths are sampled to render the pixels in the first set of pixels with a minimal loss in visual quality.

Alternatively, identifying the one or more wavelengths that provide the threshold contribution to each pixel comprises: obtaining an object spectrum associated with the first object; obtaining light source spectrums associated with each of the one or more light sources; and identifying one or more wavelengths that are present in both the object spectrum and at least one light source spectrum.

The CPU 102 can obtain the object spectrum from the spectral texture data stored in the graphics datastore 108. The object spectrum describes one or more wavelengths that are reflected by the object (i.e., not absorbed). The CPU 102 can obtain the light source spectrum from the lighting data stored in the graphics datastore 108. The light source spectrum describes the spectrum of wavelengths emitted by the light source.

The CPU 102 identifies the one or more wavelengths that are present in both the object spectrum and at least one light source spectrum by comparing the wavelengths that are reflected by the object to the spectrum of wavelengths emitted by each light source.

In some implementations, the object spectrum comprises wavelengths that meet a threshold reflection intensity and the light source spectrums comprise wavelengths that meet a threshold emission intensity. In particular, the CPU 102 compares wavelengths that are reflected by the object that meet a threshold reflection intensity with wavelengths emitted by each light source that meet a threshold emission intensity. The threshold reflection intensity and the threshold emission intensity may be the same or different values. Some light sources and objects contain only very small amounts of certain wavelengths. For example, the emission spectrum of a red-light source will have a negligible intensity towards the blue end of the visible spectrum. In this implementation, the threshold intensity could be selected such that blue wavelengths do not meet the threshold intensity, because the blue wavelengths do not have a high enough intensity. An object with a monochromatic, red surface will reflect only a negligible fraction of blue light incident upon it. Similarly, in this implementation the threshold intensity could be selected such that reflected blue wavelengths do not meet the threshold intensity, because the blue wavelengths are not reflected with a high enough intensity. Thus, in this implementation, the CPU 102 identifies the one or more wavelengths that are present in both the object spectrum and at least one light source spectrum by comparing the wavelengths that are reflected by the object (i.e., the red wavelengths that meet the threshold intensity) to the spectrum of wavelengths emitted by each light source (i.e., the red wavelengths that meet the threshold intensity). Accordingly, fewer wavelengths are sampled, thereby reducing the computational load required to render the scene.

This implementation restricts sampling only to wavelengths in which there is an overlap between the light source spectra and the object spectra. For example, in a scene comprising a white light source emitting rays to a red object, sampling in the blue portion of the spectrum will have no perceptible impact on the appearance of the surface because it reflects minimal blue light. Restricting the range of wavelengths across which the sampling takes place (and taking correspondingly fewer samples) will therefore achieve a substantially similar visual effect while rendering fewer samples, therefore saving resources.

Varying the rendering parameter values is achieved because different sets of pixels will have different wavelengths that provide the threshold contribution (e.g., because they are associated with an object having different spectral properties).

One or more of the aforementioned implementations may be combined. For example, the second implementation may be combined with the first implementation such that each pixel in the first set of pixels is assigned a respective first subset of rendering parameter values and a respective second subset of rendering parameter values.

Step 206 comprises performing spectral rendering to generate a frame of the scene using the varied rendering parameter values.

For example, performing 206 spectral rendering to generate the frame of the scene using the varied rendering parameter values comprises the following steps. The CPU 102 defines the one or more objects (based on the geometry data and texture data), light sources (based on the lighting data), and camera position (based on the viewpoint data) based on the graphics data stored on the graphics datastore 108. The CPU 102 generates primary rays from the camera position for each pixel. The primary rays comprise the rendering parameter values (e.g., wavelength values) assigned to the respective pixels, as determined in step 204. The GPU 106 determines which rays intersect with the scene geometry, and determines which points are intersected. The GPU 106 uses the texture data stored in the graphics datastore 108 to determine spectral radiance values for the intersection points, for example using a memory access operation. The spectral radiance values describe how the object material interacts with the wavelength of the intersecting ray. The GPU 106 determines a direction and intensity of reflected and refracted rays (primary and secondary rays) based on the spectral radiance values. The GPU 106 integrates contributions from all scene wavelengths and generates colour values for each pixel as rendered image data. The GPU 106 stores the pixel colour values in the frame buffer 110 and subsequently transfers the frame buffer data to the display 114 such that the display 114 displays the scene.

With respect to the first implementation, performing 206 spectral rendering to generate the frame of the scene using the varied rendering parameter values comprises performing 206 spectral rendering to generate the first frame and performing 206 spectral rendering to generate the second frame. In particular, the GPU 106 samples each pixel in the first set of pixels with the respective subsets of rendering parameter values to generate the first frame, samples each pixel in the first set of pixels with the respective second subsets of rendering parameter values to generate the second frame.

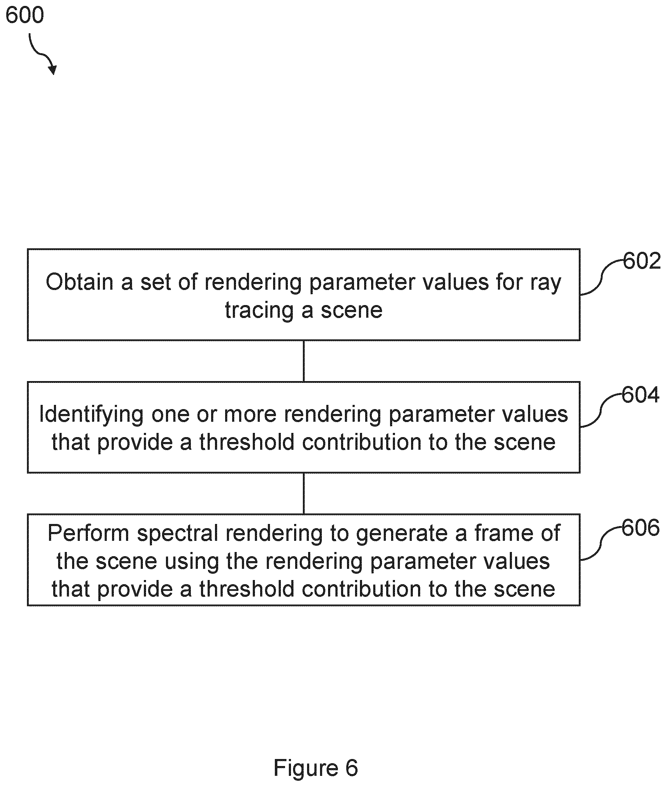

Figure 6 illustrates an alternative implementation 600 of the computer-implemented method 200 of the present invention.

This method 600 comprises obtaining 602 a set of rendering parameter values for ray tracing a scene. Step 602 is substantially similar to step 202. which is not repeated here for the sake of brevity.

In this method 600, the step of varying 204 the set of rendering parameter values across the plurality of pixels of the frame is replaced with the step of identifying 604 one or more rendering parameter values that provide a threshold contribution to the scene.

Identifying the one or more wavelengths that provide the threshold contribution to the scene comprises: identifying one or more wavelengths that reach at least one light source of the one or more light sources.

For example, using the first pixel 410 as an example, the GPU 106 performs an initial sampling by simulating the path of rays of different wavelengths through the first pixel 410. These rays propagate through the scene and interact with the object 404, based on the spectral properties of the object 404. Different wavelengths will be reflected or absorbed based on these spectral properties. The GPU 106 determines which rays (e.g., which secondary rays) reach at least one light source, and identifies the wavelengths associated with these rays as wavelengths that provide the threshold contribution. These rays will be rays that are not absorbed by the object 404 (e.g., because they are reflected). By performing this process, the GPU 106 identifies which wavelengths will actually contribute to the "look" of the scene. The GPU 106 may restrict this initial sampling to pixels associated with an object. In this way, the initial sampling is only performed on "interesting" pixels.

Through this initial sampling, the GPU 106 may determine that certain wavelengths or wavelength ranges are not required for the scene because they do not contribute to the scene, for example because they are absorbed or scattered by an object such that they do not contribute. Based on this information, the wavelengths for the scene may be selected, removing other unneeded wavelengths. Therefore, a reduced number of rays and wavelengths are sampled in the subsequent render of the pixels of the frame. Thus, fewer wavelengths are sampled to render the frame with a minimal loss in visual quality.

Alternatively, identifying the one or more wavelengths that provide the threshold contribution to each pixel comprises: obtaining an object spectrum associated with each of the one or more objects; obtaining light source spectrums associated with each of the one or more light sources; and identifying one or more wavelengths that are present in at least one object spectrum and at least one light source spectrum.

The CPU 102 can obtain the object spectrum from the spectral texture data stored in the graphics datastore 108. The object spectrum comprises one or more wavelengths that are reflected by the object (i.e., not absorbed). The CPU 102 can obtain the light source spectrums from the lighting data stored in the graphics datastore 108. The light source spectrum describes the spectrum of wavelengths emitted by the light source.

The CPU 102 identifies the one or more wavelengths that are present in at least one object spectrum and at least one light source spectrum by comparing the wavelengths that are reflected by the object to the spectrum of wavelengths emitted by each light source.

Some light sources and objects contain only very small amounts of certain wavelengths. For example, the emission spectrum of a red-light source will have a negligible intensity towards the blue end of the visible spectrum. An object with a monochromatic, red surface will reflect only a negligible fraction of blue light incident upon on it.

This implementation restricts sampling only to wavelengths in which there is an overlap between light source and the object spectra. For example, in a scene comprising a white light source emitting rays to a plurality of red objects, sampling in the blue portion of the spectrum will have no perceptible impact on the appearance of the surface because it reflects minimal blue light. Restricting the range of wavelengths across which the sampling takes place (and taking correspondingly fewer samples) will therefore achieve a substantially similar visual effect while rendering fewer samples, therefore saving resources.

The method 600 finally comprises performing 606 spectral rendering to generate a frame of the scene using the rendering parameter values that provide a threshold contribution to the scene.

Step 606 is substantially similar to step 206, except the primary rays generated from the camera position for each pixel are the wavelengths that provide a threshold contribution to the scene.

The method 600 differs from the method 200 in that all pixels are sampled using the same set of wavelengths. Since this set of wavelengths are wavelengths that provide a threshold contribution to the scene, the pixels are sampled with fewer wavelengths than if the full set of rendering parameter values was used.

### EMBODIMENTS

Although the present invention is defined in the claims, it should be understood that the present invention can also (alternatively) be defined in accordance with the following embodiments:
1. A computer-implemented method for rendering graphics data representative of a 3D scene comprising one or more objects and one or more light sources on a video gaming system, the method comprising:
   obtaining a set of rendering parameter values for ray tracing the scene;
   varying the set of rendering parameter values across a plurality of pixels of a frame of the scene; and
   performing spectral rendering to generate a frame of the scene using the varied rendering parameter values.
2. The computer-implemented method of embodiment 1, wherein the set of rendering parameter values is a set of wavelengths for ray tracing the scene.
3. The computer-implemented method of embodiment 1 or embodiment 2, wherein varying the set of rendering parameter values across the plurality of pixels comprises:
   selecting a first set of pixels from the plurality of pixels; and
   assigning, to each pixel in the first set of pixels, a respective subset of rendering parameter values;
      wherein each pixel in the first set of pixels is assigned a different subset of rendering parameter values.
4. The computer-implemented method of embodiment 3, wherein there are no common rendering parameter values between each subset of rendering parameter values.
5. The computer-implemented method of embodiment 3 or embodiment 4, wherein selecting the first set of pixels from the plurality of pixels comprises:
   selecting an array of pixels from the plurality of pixels.
6. The computer-implemented method of any of embodiments 3 to 5, wherein the number of pixels in the first set of pixels is equal to the number of rendering parameter values in the set of rendering parameter values.
7. The computer-implemented method of any of embodiments 3 to 6, further comprising:
   assigning, to each pixel in the first set of pixels, a respective second subset of rendering parameter values; and
   performing spectral rendering to generate a second frame of the scene using the second subset of rendering parameter values;
      wherein each pixel in the first set of pixels is assigned a different second subset of rendering parameter values.
8. The computer implemented method of embodiment 1 or embodiment 2, wherein varying the set of rendering parameter values across the plurality of pixels of the frame of the scene comprises:
   selecting a first set of pixels from the plurality of pixels;
   selecting a second set of pixels from the plurality of pixels;
   assigning, to each pixel in the first set of pixels, a first set of rendering parameter values; and
   assigning, to each pixel in the second set of pixels, a second set of rendering parameter values.
9. The computer implemented method of embodiment 8, wherein selecting the first set of pixels from the plurality of pixels comprises:
   identifying a user's point of regard in the 3D scene;
   determining a point of regard pixel, wherein the point of regard pixel is a pixel of the frame that corresponds to the point of regard in the 3D scene; and
   selecting one or more pixels within a boundary of the point of regard pixel as the first set of pixels.
10. The computer-implemented method of embodiment 9, wherein the boundary is a shape centred on the point of regard pixel.
11. The computer-implemented method of embodiment 10, wherein the shape is a circle and the boundary is defined by a threshold number of pixels.
12. The computer-implemented method of any of embodiments 9 to 11, wherein selecting the second set of pixels comprises:
   selecting one or more peripheral pixels as the second set of pixels;
   wherein the peripheral pixels are pixels of the frame located outside of the boundary.
13. The computer-implemented method of any of embodiments 9 to 12, wherein the first set of rendering parameter values comprises a greater number of rendering parameter values than the second set of rendering parameter values.
14. The computer-implemented method of embodiment 8, wherein selecting the first set of pixels from the plurality of pixels comprises:
   selecting a plurality of adjacent pixels having corresponding spectral properties.
15. The computer-implemented method of embodiment 14, wherein selecting the plurality of adjacent pixels having corresponding spectral properties comprises:
   selecting a plurality of pixels associated with a first object of the 3D scene.
16. The computer-implemented method of embodiment 15, wherein the set of rendering parameter values comprises a set of wavelengths, and assigning, to each pixel in the first set of pixels, the first set of rendering parameter values comprises:
   identifying one or more wavelengths that provide a threshold contribution to the first set of pixels; and
   selecting the one or more wavelengths that provide a threshold contribution to the first set of pixels as the first set of rendering parameter values.
17. The computer implemented method of embodiment 16, wherein identifying the one or more wavelengths that provide the threshold contribution to the first set of pixels comprises:
   identifying one or more wavelengths that reach at least one light source of the one or more light sources.
18. The computer implemented method of embodiment 16, wherein identifying the one or more wavelengths that provide the threshold contribution to the first set of pixels comprises:
   obtaining an object spectrum associated with the first object;
   obtaining light source spectrums associated with each of the one or more light sources; and
   identifying one or more wavelengths that are present in both the object spectrum and at least one light source spectrum.
19. The computer implemented method of embodiment 18, wherein the object spectrum comprises wavelengths that meet a threshold reflection intensity and the light source spectrums comprise wavelengths that meet a threshold emission intensity.
20. A non-transitory storage medium comprising instructions that when executed by a processor cause the processor to perform the method of any preceding embodiment.
21. A computer program comprising instructions that when executed by a processor cause the processor to perform the method of any of embodiments 1 to 19.
22. A video game system for rendering graphics data of a 3D scene, the system comprising a processor and a GPU and being configured to perform the method of any of embodiments 1 to 19.

## Claims

1. A computer-implemented method for rendering graphics data representative of a 3D scene comprising one or more objects and one or more light sources on a video gaming system, the method comprising:
obtaining (202) a set of rendering parameter values for ray tracing the scene;
varying (204) the set of rendering parameter values across a plurality of pixels of a frame(400) of the scene; and
performing (206) spectral rendering to generate a frame of the scene using the varied rendering parameter values.

2. The computer-implemented method of claim 1, wherein the set of rendering parameter values is a set of wavelengths for ray tracing the scene.

3. The computer-implemented method of claim 1 or claim 2, wherein varying the set of rendering parameter values across the plurality of pixels comprises:
selecting (302) a first set of pixels from the plurality of pixels; and
assigning (304), to each pixel in the first set of pixels, a respective subset of rendering parameter values;
wherein each pixel in the first set of pixels is assigned a different subset of rendering parameter values; optionally wherein there are no common rendering parameter values between each subset of rendering parameter values.

4. The computer-implemented method of claim 3, wherein selecting the first set of pixels from the plurality of pixels comprises:
selecting an array of pixels from the plurality of pixels.

5. The computer-implemented method of any one of claims 3 or 4, wherein the number of pixels in the first set of pixels is equal to the number of rendering parameter values in the set of rendering parameter values.

6. The computer-implemented method of any one of claims 3 to 5, further comprising:
assigning (306), to each pixel in the first set of pixels, a respective second subset of rendering parameter values; and
performing spectral rendering to generate a second frame of the scene using the second subset of rendering parameter values;
wherein each pixel in the first set of pixels is assigned a different second subset of rendering parameter values.

7. The computer implemented method of any one of claims 1 or 2, wherein varying the set of rendering parameter values across the plurality of pixels of the frame of the scene comprises:
selecting (502) a first set of pixels from the plurality of pixels;
selecting (504) a second set of pixels from the plurality of pixels;
assigning (506), to each pixel in the first set of pixels, a first set of rendering parameter values; and
assigning (508), to each pixel in the second set of pixels, a second set of rendering parameter values;
optionally wherein selecting the first set of pixels from the plurality of pixels comprises:
identifying (502A) a user's point of regard in the 3D scene;
determining (502B) a point of regard pixel, wherein the point of regard pixel is a pixel of the frame that corresponds to the point of regard in the 3D scene; and
selecting (502C) one or more pixels within a boundary of the point of regard pixel as the first set of pixels.

8. The computer-implemented method of claim 7, wherein the boundary is a shape centred on the point of regard pixel and optionally wherein the shape is a circle and the boundary is defined by a threshold number of pixels.

9. The computer-implemented method of any one of claims 7 or 8, wherein selecting the second set of pixels comprises:
selecting one or more peripheral pixels as the second set of pixels;
wherein the peripheral pixels are pixels of the frame located outside of the boundary.

10. The computer-implemented method of any one of claims 7 to 9, wherein the first set of rendering parameter values comprises a greater number of rendering parameter values than the second set of rendering parameter values.

11. The computer-implemented method of claim 7, wherein selecting the first set of pixels from the plurality of pixels comprises:
selecting a plurality of adjacent pixels having corresponding spectral properties, optionally wherein selecting the plurality of adjacent pixels having corresponding spectral properties comprises:
selecting a plurality of pixels associated with a first object of the 3D scene.

12. The computer-implemented method of claim 11, wherein the set of rendering parameter values comprises a set of wavelengths, and assigning, to each pixel in the first set of pixels, the first set of rendering parameter values comprises:
identifying one or more wavelengths that provide a threshold contribution to the first set of pixels; and
selecting the one or more wavelengths that provide a threshold contribution to the first set of pixels as the first set of rendering parameter values;
optionally wherein identifying the one or more wavelengths that provide the threshold contribution to the first set of pixels comprises:
identifying one or more wavelengths that reach at least one light source of the one or more light sources.

13. The computer implemented method of claim 12, wherein identifying the one or more wavelengths that provide the threshold contribution to the first set of pixels comprises:
obtaining an object spectrum associated with the first object;
obtaining light source spectrums associated with each of the one or more light sources; and
identifying one or more wavelengths that are present in both the object spectrum and at least one light source spectrum,
optionally wherein the object spectrum comprises wavelengths that meet a threshold reflection intensity and the light source spectrums comprise wavelengths that meet a threshold emission intensity.

14. A non-transitory storage medium comprising instructions that when executed by a processor cause the processor to perform the method of any one of the preceding claims.

15. A video game system (100) for rendering graphics data of a 3D scene, the system comprising a processor and a GPU and being configured to perform the method of any one of claims 1 to 13.
